# EUROPÄISCHE PATENTSCHRIFT

(11) **EP 2 452 599 B1**
(45) Veröffentlichungstag und Bekanntmachung des Hinweises auf die Patenterteilung: **25.10.2017**
(21) Anmeldenummer: 11187476.4
(22) Anmeldetag: 02.11.2011
(51) Int. Cl.: A47J 43/07

(54) **Rührschüssel für eine Küchenmaschine**
Stirring vessel for a kitchen appliance
Bol mélangeur pour une machine de cuisine

(30) Priorität: 12.11.2010 DE 102010043864
(43) Veröffentlichungstag der Anmeldung: 16.05.2012
(73) Patentinhaber: BSH Hausgeräte GmbH, 81739 München (DE)
(72) Erfinder: Blagotinsek, Andrej, 2380 Slovenj Gradec (SI); Pogacar, Toni, 3311 Sempeter (SI); Uplaznik, Marko, 3312 Prebold (SI)

(56) Entgegenhaltungen:
- DE-T2- 69 006 836
- GB-A- 2 434 760
- JP-A- 2003 292 062

## Beschreibung

### Gebiet der Erfindung

Die Erfindung betrifft ein Bearbeitungsbehältnis für ein Küchengerät, wobei das Bearbeitungsbehältnis ein integriertes Heizelement zum Erhitzen des Behältnisinhalts aufweist.

### Hintergrund der Erfindung

Motorbetriebene Küchengeräte im Allgemeinen und Küchenmaschinen im Speziellen sind zur schnellen, kostengünstigen und qualitativ hochwertigen Zubereitung schmackhafter Speisen weit verbreitet. Dabei geht der allgemeine Trend dahin, zahlreiche Funktionen, die gewöhnlich von unterschiedlichen Küchengeräten ausgeführt werden, in einer einzigen multifunktionalen Küchenmaschine zu vereinigen. Dies lässt sich insbesondere dadurch erreichen, dass die Grundfunktionen eines Küchengeräts, insbesondere einer Küchenmaschine, durch Zusatzfunktionen ergänzt werden. Weiterhin besteht am Markt der Bedarf, die Handhabung von Küchengeräten für den Benutzer zu vereinfachen und die Geräte ganz allgemein Benutzerfreundlicher zu gestalten.

Die Speisen, die in konventionellen Küchenmaschinen bearbeitet werden, erfordern zur Zubereitung häufig eine Wärmebehandlung, z.B. ein Kochen. Aus den Offenlegungsschriften GB 2434760 A und GB 2435434 A ist ein Küchenstandrührer mit einer Rührschüssel bekannt, deren Boden mit einem Heizelement ausgestattet ist. Das Heizelement kann z.B. eine Widerstandsheizung, eine Dickfilmheizung, eine Induktionsheizung oder eine Halogenheizung sein. Außerdem sind ein Thermostat und ein elektrischer Verbinder in die Schüssel integriert. Die Heizung eignet sich sowohl zum schnellen oder langsamen Kochen als auch zum bloßen Aufwärmen von Speisen.

Die Offenlegungsschrift US 2006/0286316 A1 offenbart einen transparenten elektrisch leitenden Film, der sich auch zur Herstellung eines transparenten Flächenheizelements eignet. Der Film weist eine Trägerlage und eine elektrisch leitende Lage mit feinen leitenden Partikeln und einem organischen Metallkomplex auf. Ein Verfahren zur Herstellung des Films ist ebenfalls offenbart.

Verschiedene Anwendungen von schichtartigen Heizelementen sind aus den Offenlegungsschriften WO 2008/085550 A2 und US 2008/0235998 A1 bekannt. So offenbart die Offenlegungsschrift WO 2008/085550 A2 die Verwendung einer elektrisch leitenden Beschichtung zum Enteisen von Fahrzeugen und Flugzeugen, insbesondere von Flugzeugflügeln. In der Offenlegungsschrift US 2008/0235998 A1 wird ein Bügeleisen mit einer mehrlagigen leitenden Nanobeschichtung als Heizelement offenbart.

Schließlich offenbart die Offenlegungsschrift WO 2008/109682 A2 ein System zum Enteisen von Windschutzscheiben von Autos, Zügen, Flugzeugen und Helikoptern, das einen optisch transparenten Metall- oder Metalloxidfilm als Heizelement umfasst.

In der japanischen Offenlegungsschrift JP 2003 292062 A ist ein Tafelgeschirr offenbart, bei dem durch einen Oxid-Halbleiterfilm ein Kochen von Speisen ermöglicht wird, so dass kein Kocher benötigt wird und es außerdem nicht notwendig ist, die Speisen in einen anderen Behälter umzufüllen. Hierfür wird eine Halbleitermembran auf die Oberfläche des Tafelgeschirrs aufgebracht, die zum Erwärmen der Speisen dient.

Die Patentschrift DE 690 06 836 T2 offenbart eine Schüssel als Zusatzgerät einer Universalküchenmaschine, wobei die Schüssel eine Heizvorrichtung aufweist, die zum Erwärmen der Schüssel dient. Die Heizvorrichtung verteilt sich auf ein seitliches Heizelement, das aus einem Widerstandsdraht besteht, und ein Bodenheizelement, das aus einem ummantelten Heizelement besteht.

### Der Erfindung zugrundeliegende Aufgabe

Der Erfindung liegt die Aufgabe zugrunde, ein verbessertes Bearbeitungsbehältnis für ein Küchengerät bereitzustellen, wobei das Bearbeitungsbehältnis ein integriertes Heizelement zum Erhitzen des Behältnisinhalts aufweist. Weiter liegt der Erfindung die Aufgabe zugrunde, ein verbessertes Küchengerät mit einem Bearbeitungsbehältnis bereitzustellen. Durch die Erfindung soll die Zubereitung von Speisen erleichtert werden.

Insbesondere soll eine effizientere und damit energiesparendere Erhitzung von Nahrungsmitteln bei der Zubereitung ermöglicht werden. Das Bearbeitungsbehältnis und das Küchengerät sollen einfach und preiswert herstellbar sein.

### Erfindungsgemäße Lösung

Die Lösung der gestellten Aufgabe gelingt durch ein Bearbeitungsbehältnis für ein Küchengerät nach dem Anspruch 1. Sie gelingt außerdem durch ein Küchengerät mit einem solchen Bearbeitungsbehältnis.
Eine elektrische Heizschicht im Sinne der vorliegenden Erfindung ist eine ein- oder mehrlagige Schicht, die elektrische Energie in Wärme umwandelt. Sie unterscheidet sich in ihrer Flächenartigkeit grundsätzlich von konventionellen Widerstandsdrahtheizungen, bei denen das Heizelement nicht als im Wesentlichen zweidimensionale Schicht sondern als im Wesentlichen eindimensionaler Draht ausgebildet ist.

Die Erfindung nutzt unter anderem aus, dass sich eine Heizschicht vergleichsweise einfache in größeren Bereichen des Behältnisses angebracht werden kann. Dadurch lässt sich ohne übermäßigen konstruktiven Aufwand die erforderliche Heizleistung besser über das Behältnis verteilen und umgekehrt vermeiden, dass bestimmte Bereich des Behältnisses besonders stark erhitzt werden, wodurch eine effizientere Erwärmung der in dem Behältnis befindlichen Speise erzielbar ist. Insbesondere kann eine Aufwärm- oder Garzeit verkürzt werden und es kann Energie eingespart werden. Auch kann vermeiden werden, dass sich ein Benutzer durch Berühren eines besonders heißen Teils des Behältnisses verletzt. Außerdem kann durch die Verwendung der erfindungsgemäßen Heizschicht Gewicht eingespart werden, was die Handhabung des Bearbeitungsbehältnisses erleichtert. Schließlich ermöglicht es die Erfindung, die zahlreichen ästhetischen Gestaltungsoptionen zu nutzen, die Heizschichten bieten. So sind auf dem Markt z.B. transparente Heizschichten bekannt, die sich vorteilhaft in ein transparentes Bearbeitungsbehältnis integrieren lassen.

Ein Erwärmen im Sinne der vorliegenden Erfindung kann jede Wärmezufuhr sein, z.B. ein Aufwärmen, ein langsames oder schnelles Kochen oder selbst ein Backen, Braten oder Frittieren im Behältnis zuzubereitender Lebensmittel.

Geeignete Heizschichten sind dem Fachmann z.B. aus den Offenlegungsschriften US 2006/0286316 A1, WO 2008/085550 A2, US 2008/0235998 A1 und WO 2008/109682 A2 bekannt, deren diesbezüglicher Inhalt Teil der vorliegenden Offenbarung ist.

Das Bearbeitungsbehältnis kann z.B. eine Rühr- und/oder Knetschüssel oder ein Mixbecher sein. Als Küchengerät kommt vorzugsweise ein motorbetriebenes, besonders vorzugsweise ein elektromotorisches Küchengerät in Frage. Das Küchengerät ist vorzugsweise ein Standgerät, z.B. eine Küchenmaschine oder ein Standmixer.

Es ist ein erreichbarer Vorteil der Erfindung, dass zusätzlich zu einem gewöhnlich mit dem Küchengerät ausgeführten Bearbeitungstyp (z.B. einem Rühren mit einem Rührwerkzeug des Küchengeräts, ein Schlagen mit einem Schneebesen, ein Pürieren mit einem Püriermesser oder ein Kneten mit einem Knetwerkzeug des Küchengeräts) noch ein weiterer Bearbeitungstyp, z.B. ein Kochen, im gleichen Behältnis ausgeführt werden kann, d.h., das Bearbeitungsgut muss für die beiden Bearbeitungstypen in unterschiedliche Behältnisse umgefüllt werden. Die beiden Bearbeitungstypen können gleichzeitig oder in aufeinanderfolgenden Schritten ausgeführt werden.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche. Die Bezugszeichen in sämtlichen Ansprüchen haben keine einschränkende Wirkung, sondern sollen lediglich deren Lesbarkeit verbessern.

Bei einem bevorzugten Bearbeitungsbehältnis ist die Heizschicht optisch transparent. Hierbei meint "optisch transparent", dass die Heizschicht zumindest in einem Teil des Wellenlängenbereichs des sichtbaren Lichts durchlässig ist. Dabei kann die Heizschicht eine Farbe haben, d.h. sie muss nicht in allen Wellenlängenbereichen des sichtbaren Lichts durchlässig sein, schon gar nicht gleichmäßig durchlässig. Eine bevorzugte Heizschicht ist jedoch weiß, d.h. sie ist über das gesamte Spektrum des sichtbaren Lichts im Wesentlichen gleichermaßen durchlässig. Die optisch transparente Heizschicht muss nicht notwendigerweise klar sein sondern sie kann auch lediglich diffuse lichtdurchlässig sein, etwa ähnlich einer Milchglasfläche oder einer mattierten Glasfläche. Eine bevorzugte optisch transparente Heizschicht ist jedoch klar, d.h. ein Benutzer kann durch sie hindurchsehen. Eine geeignete Heizschicht ist dem Fachmann aus den Offenlegungsschriften US 2006/0286316 A1 und WO 2008/109682 A2 bekannt, deren diesbezüglicher Inhalt Teil der vorliegenden Offenbarung ist.

Das bevorzugte Bearbeitungsbehältnis weist neben der Heizschicht ein Material auf, das dem Bearbeitungsbehältnis seine Stabilität verleiht. Es kommen hierfür grundsätzlich leitende Materialien, z.B. Stahl oder Aluminium, und nichtleitende Materialien, z.B. Glas oder Kunststoff, in Frage. Im Fall eines leitenden Materials ist zwischen diesem Material und der Heizschicht gewöhnlich eine Isolierschicht erforderlich, um Kurzschlüsse zu vermeiden. bei einer optisch transparenten Heizschicht ist auch diese Isolierschicht vorzugsweise optisch transparent, vorzugsweise klar, vorzugsweise weiß.
Vorzugsweise weist das Bearbeitungsbehältnis als ein weiteres Material, das nicht die Heizschicht ist, ein optisch transparentes Material ist. Besonders vorzugsweise besteht die Bearbeitungsbehältnis, neben der Heizschicht und eventuell weiterer in die Bearbeitungsbehältnis integrierter Komponenten, im Wesentliche aus diesem optisch transparenten Material. Gewöhnlich ist es dieses weitere optisch transparente Material, das dem Bearbeitungsbehältnis im Wesentlichen seine mechanische Stabilität verleiht. Geeignete Materialien sind z.B. ein Glas oder ein Kunststoff. Wie im Fall der optisch transparenten Heizschicht kann das weitere Material eine Farbe haben, d.h. es muss nicht in allen Wellenlängenbereichen des sichtbaren Lichts durchlässig sein, schon gar nicht gleichmäßig durchlässig. Ein bevorzugtes Material ist jedoch weiß, d.h. es ist über das gesamte Spektrum des sichtbaren Lichts im Wesentlichen gleichermaßen durchlässig. Das optisch transparente Material muss nicht notwendigerweise klar sein sondern kann auch lediglich diffus lichtdurchlässig sein. Es kann sich zum Beispiel um Milchglas oder mattiertes Glas handeln. Ein bevorzugtes Material ist jedoch klar, d.h. ein Benutzer kann durch es hindurchsehen.
Das bevorzugte Bearbeitungsbehältnis weist sowohl die optische transparente Heizschicht als auch das optisch transparente weitere Material auf. Besonders vorzugsweise ist die Heizschicht im Wesentlichen in allen sichtbaren Wellenlängenbereichen transparent, in denen auch das weitere Material transparent ist. Dadurch lässt sich vorteilhafterweise erreichen, dass die Heizschicht auf oder in der Wand des Bearbeitungsbehältnisses weitgehend unsichtbar wird. So ist es beispielsweise möglich, einen Satz von Bearbeitungsbehältnissen bereitzustellen, von denen das eine eine erfindungsgemäße Heizschicht aufweise, das andere jedoch nicht, und die dennoch in ihrer Transparenz und Farbe kaum zu unterscheiden oder im Wesentlichen identisch sind.

Erfindungsgemäß erstreckt sich die Heizschicht über wenigstens einen Teil der Wand des Bearbeitungsbehältnisses. Dabei ist unter der Wand der Teil des Bearbeitungsbehältnisses zu verstehen, der sich den Boden des Bearbeitungsbehältnisses umschließend von diesem erhebt, sodass im Wesentlichen erst durch Boden und Wand gemeinsam in Innenraum zur Aufnahme eines Bearbeitungsguts geschaffen wird. Demnach ist der Boden des Bearbeitungsbehältnisses dessen im Wesentlichen ebene Grundfläche. Es sind auch Bearbeitungsbehältnisse denkbar, die im Wesentlichen keinen Boden sondern nur eine Wand aufweisen, z.B. halbkugel- oder kegelförmige Bearbeitungsbehältnisse.
Eine bevorzugte Heizschicht erstreckt sich über mehrere Seiten des Bearbeitungsbehältnisses. Unter "mehreren Seiten" soll vorliegend verstanden werden, dass es keinen Winkelbereich des Umfangs der Wand des Bearbeitungsbehältnisse gibt, der größer als 180° (bezogen auf einen Vollwinkel von 360°) ist und in dem nicht ein Teil der Heizschicht liegt. Vorzugsweise ist wenigstens die Hälfte des Umfangs, besonders vorzugsweise wenigstens 3/4, besonders vorzugsweise im Wesentlich der gesamten Umfang des Bearbeitungsbehältnisses mit der Heizschicht ausgestattet.
Vorzugsweise erstreckt sich die Heizschicht zumindest teilweise bis zu einem Drittel, besonders vorzugsweise bis zur Hälfte der Höhe des Bearbeitungsbehältnisses. Besonders vorzugsweise erstreckt sich die Heizschicht in allen Bereichen der Schüsselumfangs, die mit der Heizschicht belegt sind, bis zu einem Drittel, besonders vorzugsweise bis zur Hälfte der Höhe des Bearbeitungsbehältnisses. Es sind auch Ausführungen der Erfindung denkbar, bei denen sich die Heizschicht im Wesentlichen über die gesamte Wand des Behältnisses erstreckt. Durch diese Maßnahmen kann vorteilhafterweise erreicht werden, dass dem Inhalt des Bearbeitungsbehältnisses von möglichst vielen Seiten erwärmt wird. Die Erwärmung kann so effizienter erfolgen, die Erwärmungszeit kann reduziert werden und es kann Energie eingespart werden. Die Heizschicht erstreckt sich über wenigstens einen Teil des Bodens, besonders vorzugsweise über den gesamten Boden des Bearbeitungsbehältnisses. Besonders vorzugsweise erstreckt sich die Heizschicht sowohl über einen Teil des oder den gesamten Boden(s) als auch über einen Teil der oder die gesamte Wand. Durch diese Maßnahmen kann vorteilhaft erreicht werden, dass dem Inhalt des Bearbeitungsbehältnisses von möglichst vielen Seiten erwärmt wird. Auch dies kann zu einer effizienten Erwärmung den Behältnisinhalts beitragen, die Erwärmungszeit kann reduziert werden und es kann Energie eingespart werden. Die Heizfläche ist in das Behältnis eingebettet. Bei dem Bearbeitungsbehältnis der Erfindung ist die Heizschicht in ein Material, vorzugsweise das oben genannte weitere optisch transparente Material, eingebettet, d.h., die Heizschicht ist zwischen zwei Schichten dieses Material eingeschlossen, z.B. zwischen zwei Glasschichten oder zwei Kunststoffschichten. Dadurch kann die Heizschicht z.B. wirkungsvoll gegen Beschädigungen und Korrosion geschützt werden.
Ein bevorzugtes Arbeitsbehältnis ist auf seiner Außenseite mit einer Isolierschicht zur thermischen Isolierung ausgestattet, zum Beispiel aus einem Kunststoffschaum. Hierdurch kann ein Wärmeverlust nach außen gemindert und Verletzungen durch Verbrennung vorgebeugt werden.
Die Heizschicht muss nicht notwendigerweise zusammenhängend sein sondern kann auch aus mehreren voneinander getrennten Schichtstücken besteht. Solche Schichtstücke können zur elektrischen Versorgung untereinander leitend verbunden sein, z.B. mit konventionellen Leitern, beispielsweise Drähten. In einer bevorzugten Ausführung jedoch ist die Heizschicht einstückig ausgebildet ist. Auch hierbei kann die Heizschicht aus mehreren größerflächigen Schichtstücken bestehen, die dann mit langgestreckten Verbindungsschichtstücken der Heizschicht miteinander verbunden sind.

Das bevorzugte Bearbeitungsbehältnis ist mit einem elektrischen Verbinder zur elektrischen Versorgung der Heizschicht ausgestattet. Der Verbinder kann z.B. elektrische Kontakte aufweisen, die auf der Außenseite des Behältnisses angeordnet sind, um von Gegenkontakten, vorzugsweise Gegenkontakten des Küchengeräts, zur Stromversorgung kontaktiert zu werden. Die Kontakte sind vorzugsweise diskret am Äußeren des Behältnisses platziert. Wenn das Behältnis korrekt in dem Küchengerät platziert ist, kontaktieren sie stromführende Gegenkontakte des Küchengeräts und stellen dadurch eine Stromversorgung der Heizschicht sicher. Es ist aber auch ein kontaktloser Verbinder denkbar, z.B. ein induktiver Verbinder. Dieser kann z.B. eine Drahtspule umfassen, die einem elektromagnetischen Wechselfeld Energie entziehen kann, um die Heizschicht mit Strom zu versorgen.

Das bevorzugte Bearbeitungsbehältnis weißt außerdem vorzugsweise einen Thermostat auf. Der Thermostat kann dazu eingesetzt werden, die Temperatur der Heizschicht und/oder der Speise im Innenraum des Behältnisses zu ermittel, um die Heizschicht entsprechend zu regeln. Die Regelelektronik ist vorzugsweise im Küchengerät untergebracht. Darüber hinaus sind an dem Küchengerät vorzugsweise Bedien- und Anzeigeelemente vorgesehen. Informationen zwischen Thermostat und Elektronik im Küchengerät können z.B. über die Kontakte zur Stromversorgung der Heizschicht oder über zusätzliche Kontakte sichergestellt werden. Die Steuerung der Heizschicht, die dem Benutzer zur Verfügung gestellten Eingriffs-, Einstell- und Überwachungsmöglichkeiten und die dazu vorgesehenen Bedien- und Anzeigemittel können analog zu den aus der Offenlegungsschrift GB 2435434 A offenbarten Ausgestaltungen ausgebildet sein. Der diesbezügliche Inhalt dieser Schrift ist durch Verweis Teil der vorliegenden Offenbarung.

### Kurzbeschreibung der Zeichnung

Weitere vorteilhafte Ausgestaltungen werden nachfolgend an Hand eines in der Zeichnung dargestellten Ausführungsbeispiels, auf welches die Erfindung jedoch nicht beschränkt ist, näher beschrieben.

Es zeigt schematisch:

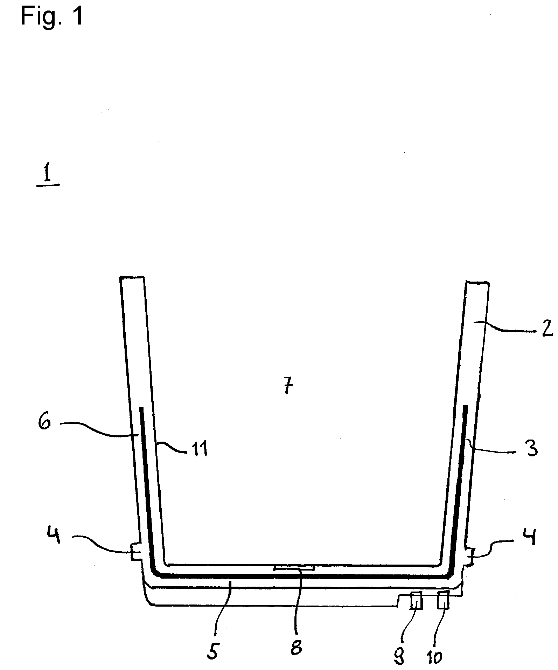

- Fig. 1: ein erfindungsgemäßes Bearbeitungsbehältnis in Querschnittsansicht.

### Ausführliche Beschreibung anhand eines Ausführungsbeispiels

Das in der Figur 1 dargestellte Bearbeitungsbehältnis ist eine Rührschüssel 1, die im Wesentlichen aus optisch transparentem klarem weißem Kunststoff 2 besteht. Durch den Kunststoff 2 ist die Schüssel 1 optisch attraktiv, stabil und dennoch leicht, einfach zu reinigen und kostengünstig in der Herstellung. In den transparenten Kunststoff 2 ist eine optisch transparente Heizschicht 3 von dem in US 2006/0286316 A1 oder WO 2008/109682 A2 offenbarten Typ eingebettet. Aufgrund der Transparenz der Heizschicht 3 fällt ihre Gegenwart der für den Betrachter kaum auf, d.h. die Heizschicht 3 verschwindet optisch nahezu in dem Kunststoffmaterial 2 des Behälters 1. Durch das umgebende Kunststoffmaterial 2 ist die Heizschicht 1 gut gegen Beschädigung und Korrosion geschützt. Insbesondere kann verhindert werden, dass die Heizschicht mit Flüssigkeit aus der Rührschüssel 1 oder beim Reinigen in Berührung kommt. In einer alternativen Ausführung könnte die Heizschicht 3 auf die Innenseite 11 der Rührschüssel 1 aufgebracht und mit einer elektrisch isolierenden und mechanisch schützenden Lage überdeckt sein.

Die Rührschüssel 1 ist für die Verwendung mit einer in der Figur nicht dargestellte Standküchenmaschine ausgebildet. Es weist Befestigungsmittel 4 auf, um es an der dafür vorgesehenen Stelle der Standküchenmaschine zu fixieren. Die Standküchenmaschine weist eine bei montiertem Bearbeitungsbehältnis mittig über dem Bearbeitungsbehältnis angeordnete Kupplungsstelle auf, an die verschiedene austauschbare Bearbeitungswerkzeuge angekuppelt werden können, z.B. rotierende Püriermesser, Schneebesen, Rührer oder Knethaken, um den Behältnisinhalt zu bearbeiten. Dazu reichen die Werkzeuge von oben in das Bearbeitungsbehältnis hinein.

Die Heizschicht 3 erstreckt sich über den gesamten Boden 5 der Rührschüssel 1 und über den gesamten Umfang der Rührschüsselwand 6 bis etwa zur halben Höhe des Rührschüsselinnenraums 7. Dadurch wird das Bearbeitungsgut in der Rührschüssel 1 im Wesentlichen von allen Seiten erwärmt, was die Erwärmungszeit verkürzt und Energie eingespart.

In die Rührschüssel 1 ist außerdem ein Thermostat 8 integriert, um die Temperatur in der Nähe der Heizschicht 3 zu messen und die Elektrizitätszuführung an die Heizschicht 3 und damit den Erwärmungsgrad der Heizschicht 3 durch Vergleich des vom Thermostat 8 gemessenen Werts mit einem vorgegebenen Sollwert zu regeln. Die Regelelektronik ist in der Standküchenmaschine untergebracht. Dort befindet sich auch die Stromversorgung für die Heizschicht. Die Standküchenmaschine weist auch Bedienelemente auf, mit denen ein Benutzer den Grad der gewünschten Erwärmung, eventuelle Erwärmungsintervalle und anderes einstellen kann.

Zum Anschluss der Heizschicht 3 und des Thermostats 8 an die Standküchenmaschine sind im unteren Bereich der Rührschüssel 1 elektrische Kontaktstifte 9, 10 vorgesehen, die bei ordnungsgemäß in der Standküchenmaschine installierter Rührschüssel 1 korrespondierende Kontakte der Standküchenmaschine berühren, um einen elektrischen Kontakt herzustellen.

Durch die Erfindung kann ein optisch attraktiveres selbstheizendes Bearbeitungsbehältnis für ein Küchengerät bereitgestellt werden, das außerdem den Behältnisinhalt effektiver erwärmen kann und das einfach zu konstruieren ist.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Bearbeitungsbehältnis (1) für ein Küchengerät, wobei das Bearbeitungsbehältnis (1) ein integriertes Heizelement zum Erwärmen des Behältnisinhalts aufweist, wobei das Heizelement als elektrische Heizschicht (3) ausgebildet ist, wobei sich die Heizschicht (3) sowohl über wenigstens einen Teil des Bodens (5) als auch über wenigstens einen Teil der Wand (6) des Bearbeitungsbehältnisses (1) erstreckt, **dadurch gekennzeichnet, dass** die Heizschicht (3) in ein Material (2) des Bearbeitungsbehältnisses (1) eingebettet ist.

2. Bearbeitungsbehältnis (1) nach Anspruch 1, **dadurch gekennzeichnet, dass** die Heizschicht (3) optisch transparent ist.

3. Bearbeitungsbehältnis (1) nach einem der vorherigen Ansprüche, **dadurch gekennzeichnet, dass** ein weiteres Material (2) des Bearbeitungsbehältnisses, das nicht die Heizschicht ist, optisch transparent ist.

4. Bearbeitungsbehältnis (1) nach einem der vorherigen Ansprüche, **dadurch gekennzeichnet, dass** die Heizschicht (3) sich über mehrere Seiten des Bearbeitungsbehältnisses (1) erstreckt.

5. Bearbeitungsbehältnis (1) nach einem der vorherigen Ansprüche, **dadurch gekennzeichnet, dass** die Heizschicht (3) einstückig ausgebildet ist.

6. Bearbeitungsbehältnis (1) nach einem der vorherigen Ansprüche, **dadurch gekennzeichnet, dass** die Bearbeitungsbehältnis (1) mit einem elektrischen Verbinder (9, 10) zur elektrischen Versorgung der Heizschicht (3) ausgestattet ist.

7. Küchengerät mit einem Bearbeitungsbehältnis (1) nach einem der vorherigen Ansprüche.

## Claims

1. Processing receptacle (1) for a kitchen appliance, wherein the processing receptacle (1) has an integrated heating element for heating the receptacle contents, wherein the heating element is embodied as an electrical heating coating (3), wherein the hearing coating (3) extends both across at least one part of the base (5) and also across at least one part of the wall (6) of the processing receptacle (1), **characterised in that** the heating coating (3) is embedded in a material (2) of the processing receptacle (1).

2. Processing receptacle (1) according to claim 1, **characterised in that** the heating coating (3) is optically transparent.

3. Processing receptacle (1) according to one of the preceding claims, **characterised in that** a further material (2) of the processing receptacle, which is not the heating coating, is optically transparent.

4. Processing receptacle (1) according to one of the preceding claims, **characterised in that** the heating coating (3) extends across a number of sides of the processing receptacle (1).

5. Processing receptacle (1) according to one of the preceding claims, **characterised in that** the heating coating (3) is embodied in one piece.

6. Processing receptacle (1) according to one of the preceding claims, **characterised in that** the processing receptacle (1) is equipped with an electrical connector (9, 10) for supplying electricity to the heating coating (3).

7. Kitchen appliance with a processing receptacle (1) according to one of the preceding claims.

## Revendications

1. Récipient de traitement (1) pour un appareil de cuisine, dans lequel le récipient de traitement (1) présente un élément chauffant intégré pour chauffer le contenu du récipient, dans lequel l'élément chauffant est exécuté sous la forme d'une couche chauffante électrique (3), la couche chauffante (3) s'étendant à la fois sur au moins une partie du fond (5) et sur au moins une partie de la paroi (6) du récipient de traitement (1), **caractérisé en ce que** la couche chauffante (3) est logée dans un matériau (2) du récipient de traitement (1).

2. Récipient de traitement (1) selon la revendication 1, **caractérisé en ce que** la couche chauffante (3) est optiquement transparente.

3. Récipient de traitement (1) selon l'une des revendications précédentes, **caractérisé en ce qu'**un matériau supplémentaire (2) du récipient de traitement, qui n'est pas la couche chauffante, est optiquement transparent.

4. Récipient de traitement (1) selon l'une des revendications précédentes, **caractérisé en ce que** la couche chauffante (3) s'étend sur plusieurs côtés du récipient de traitement (1).

5. Récipient de traitement (1) selon l'une des revendications précédentes, **caractérisé en ce que** la couche chauffante (3) est exécutée en une seule pièce.

6. Récipient de traitement (1) selon l'une des revendications précédentes, **caractérisé en ce que** le récipient de traitement (1) est équipé d'un connecteur électrique (9, 10) pour l'alimentation électrique de la couche chauffante (3).

7. Appareil de cuisine avec un récipient de traitement (1) selon l'une des revendications précédentes.
